(19) Europäisches Patentamt
European Patent Office
Office européen des brevets

(11) Veröffentlichungsnummer: **0 204 240**
**B1**

(12) **EUROPÄISCHE PATENTSCHRIFT**

(45) Veröffentlichungstag der Patentschrift: **02.05.90**

(51) Int. Cl.[5]: **C 01 B 33/21**, C 01 B 33/34

(21) Anmeldenummer: **86107099.3**

(22) Anmeldetag: **26.05.86**

(54) **Gelbildendes organophiles Schichtsilikat, Verfahren zu seiner Herstellung und Verwendung.**

(30) Priorität: **07.06.85 DE 3520314**

(43) Veröffentlichungstag der Anmeldung:
**10.12.86 Patentblatt 86/50**

(45) Bekanntmachung des Hinweises auf die Patenterteilung:
**02.05.90 Patentblatt 90/18**

(84) Benannte Vertragsstaaten:
**AT BE CH DE FR GB IT LI NL SE**

(56) Entgegenhaltungen:
**DE-A-3 149 131**
**GB-A-2 088 932**

(73) Patentinhaber: **HOECHST AKTIENGESELLSCHAFT**
**Postfach 80 03 20**
**D-6230 Frankfurt am Main 80 (DE)**

(72) Erfinder: **Kalz, Hans-Jürgen, Dr.**
**Am Wehr 5**
**D-6237 Liederbach (DE)**
Erfinder: **Blumenthal, Thomas, Dr.**
**Geisenheimer Strasse 88**
**D-6000 Frankfurt am Main 71 (DE)**
Erfinder: **Bücking, Hans-Walter, Dr.**
**In den Padenwiesen 30**
**D-6233 Kelkheim (Taunus) (DE)**
Erfinder: **Hofinger, Manfred, Dr.**
**Hoher Göll Weg 7**
**D-8269 Burgkirchen (DE)**

**EP 0 204 240 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Der Erfindung betrifft organophile Schichtsilikate, die in organischen Lösemitteln unter Bildung eines Gels dispergierbar sind.

Organo-Smectite oder organophile Schichtsilikate, das sind mit organischen Kationen belegte Tonmineralien, stellen gute Thixotropierungsmittel für organische Systeme verschiedener Polarität dar. Die einsetzbaren Tonmineralien gehören der Gruppe der 2:1-Schichtsilikate an, deren Schichten eine negative Ladung tragen, die durch Zwischenschicht-Kationen kompensiert wird. Nach der Kristallstruktur unterscheidet man dioktaedrische und trioktaedrische Vertreter. Zu den dioktraedrischen Vertretern gehört der Montmorillonit mit dem Sonderfall des Bentonits, der Beidellit und der Nontronit. Zu der trioktaedrischen Gruppe gehören Saponit und Hectorit. Die wichtigsten Typen für die Anwendung als Thixotropierungsmittel sind Hectorite und Bentonite.

Es ist, z.B. aus der DE—OS 3149 131, bekannt, daß sich aus einem Schichtsilikat mit austauschbaren Kationen und wäßrigen Lösungen eines organischen Tetraalkylammoniumsalzes (z.B. Dimethyldistearylammoniumchlorid oder Dimethylbenzylstearylammoniumchlorid) organophile Schichtsilikate (Organo-Smectite) herstellen lassen, die zur Erzeugung von Gelen in organischen Lösemitteln geeignet sind. Die organophilen Schichtsilikate werden von ihrem Einsatz in der Regel in einem organischen Solvens vorgequollen. Üblicherweise werden Pasten mit etwa 10 Gew.-%, sogenannte Stammpasten, hergestellt und mindestens 24 Stunden vor dem Einsatz gelagert, damit die Silikate ihre volle Wirksamkeit entfalten können. Als organische Lösemittel dienen zu diesem Zweck Kohlenwasserstoffe, wie Toluol, Xylol und Benzin, aber auch polarere Lösemittel wie Alkohole und Ketone. Aus Kohlenwasserstoffen mit höherem Molekulargewicht lassen sich festere Stammpasten erhalten.

Wenn man unpolare Lösemittel für die Herstellung der Stammpaste benutzt, ist es oftmals nötig, geringe Mengen (z.B. bis 40 Gew.-% bezogen auf das eingesetzte Silikat) eines polaren Lösemittels, wie Methanol, zuzusetzen.

Anstelle des polaren Lösemittels kann man auch ionogene oder nicht-ionogene Netzmittel für die Gelierung von organisch vorbehandelten Schichtsilikaten zusetzten, die für diesen Zweck auch als Handelsprodukt zur Verfügung stehen. Diese Additive werden in der Regel in Mengen von 10—60 Gew.-%, bezogen auf das Organosilikat der Aufschlämmung in einem organischen Lösemittel zugesetzt. Die Pasten werden durch diesen Zusatz oftmals fließfähiger und sind daher besser handhabbar. Auch die Zeit bis zur Ausbildung des Gels kann sich verkürzen.

Die nach dem oben erwähnten Verfahren hergestellten organophilen Schichtsilikate führen jedoch zu Stammpasten, die nicht lagerstabil sind und nach einem längeren Zeitraum Lösemittel abscheiden, wobei der verbleibende Teil der Pasten härter und feststoffreicher wird. Die Pasten müssen daher vor ihrem Einsatz erneut aufgerührt werden. Ferner ist die Anfangskonzentration des organophilen Silikats in der Stammpaste begrenzt, da sonst die Gefahr besteht, daß die Paste zu fest wird und nicht mehr verarbeitet werden kann. Außer in der oben erwähnten DE—OS 3 149 131 sind organophil modifizierte Schichtsilikate, die eine quartäre Ammoniumverbindung einer ähnlichen Struktur enthalten, auch in der DE—OS 3 145 457 beschrieben.

Es bestand daher die Aufgabe, neue Organo-Schichtsilikate zu finden, deren Pasten eine erhöhte Lagerstabilität aufweisen und eine höhere Anfangskonzentration an organophilem Silikat erlauben.

Es wurde nun ein gelbildendes organophiles Schichtsilikat gefunden, dessen austauschbare Kationen ganz oder teilweise durch eine quartäre Ammoniumverbindung der Formel

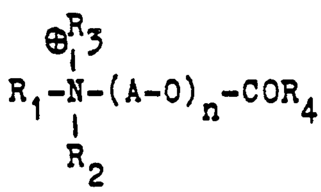

ersetzt sind, wobei $R_1$ und $R_2$ gleich oder verschieden sein können und $C_6$—$C_{30}$-, vorzugsweise $C_8$—$C_{18}$-Alkyl oder $C_6$—$C_{30}$-, vorzugsweise $C_8$—$C_{18}$-Alkenyl, $R_3$ $C_1$—$C_6$-, vorzugsweise $C_1$—$C_4$-Alkyl, $R_4$ $C_1$—$C_6$-Alkyl, A die Gruppe —$C_2H_4$— oder —$C_3H_7$— und n 1 oder 2 bedeuten.

Die erfindungsgemäßen organophilen Schichtsilikate lassen sich herstellen durch Umsetzen eines Schichtsilikats, das austauschbare Kationen aufweist, mit einem Salz, das als Kation eine quartäre Ammoniumverbindung der oben angegebenen Formel enthält. Die Umsetzung erfolgt in Gegenwart eines Lösungsmittels für die quartäre Ammoniumverbindung, vorzugsweise in Wasser; jedoch können auch organische Lösungsmittel, wie Alkohole verwendet werden. Die quartären Ammoniumverbindungen enthalten als Anionen die Anionen von organischen Säuren, Halogenid-, Methosulfat- oder Methophosphat-Ionen. Als organische Säuren kommen insbesondere in Frage $C_1$—$C_6$-Alkanmonocarbonsäuren, $C_1$—$C_6$-Hydroxymonoalkancarbonsäuren, $C_2$—$C_6$-Alkandicarbonsäuren, Mono- oder Di-hydroxy-$C_2$—$C_6$-alkandicarbonsäuren, Fumarsäure, Maleinsäure, Citronensäure oder Benzoesäure. Bevorzugte Säuren sind Essigsäure, Propionsäure und Milchsäure.

Als Schichtsilikate werden verwendet bekannte natürliche oder synthetische Schichtsilikate, insbesondere 2:1 Schichtsilikate, vorzugsweise Hectorit, Bentonit, Montmorillonit, Beidellit, Saponit und Sterensit. Wenn natürliche Tonminerale eingesetzt werden, ist zuvor eine Reinigung des Rohproduktes durch Abtrennung von nicht quellfähigem Material notwendig. Vorzugsweise sollte das Schichtsilikat in einer hoch quellfähigen Form, z.B. der Natriumform vorliegen. Diese Form läßt sich leicht durch eine vorgeschaltete Ionenaustauschreaktion herstellen. Besonders günstig ist es, wenn die eingesetzten Schichtsilikate möglichst fein verteilt sind.

Die Kristallgröße läßt sich über die Halbwertsbreite von Röntgenbeugungsreflexen messen (H. Krischner, Einführung in die Röntgenfeinstrukturanalyse, Braunschweig, 1980). Die Kristallgröße von Schichtsilikaten läßt sich speziell durch die Halbwertsbreite des Reflexes, der der 060-Ebene zugeordnet wird, bestimmen (GB—PS 1376379, S.3).

Am besten haben sich bewährt Schichtsilikate, deren 060-Halbwertsbreiten zwischen 0,8 und 1,2° (2θ), vorzugsweise zwischen 0,8 und 1,0° (2θ) liegen. Schichtsilikate mit der angegebenen Halbwertsbreite lassen sich leicht synthetisch herstellen. Besonders bewährt hat sich die Verwendung von Hectoriten, die unter hydrothermalen Bedingungen synthetisiert wurden. Die so erhaltenen hoch quellfähigen Schichtsilikate sind für die Herstellung der erfindungsgemäßen organophilen Schichtsilikate besonders gut geeignet.

Es ist für eine Gelbildung wünschenswert, wenn das verwendete Schichtsilikat eine Ionenaustauschkapazität von 50—120 mVal/100 g, insbesondere 80—100 mVal/100 g Silikat, aufweist.

Die Herstellung eines synthetischen Hectorits aus einer Magnesiumionen enthaltenden wäßrigen Lösung oder Suspension, einer $Na_2O$-Quelle und einer $SiO_2$-Quelle wird in der DE—OS 3 207 886 beschrieben. Dabei können Lithium- und/oder Fluoridionen anwesend sein. Wenn die $SiO_2$-Quelle (meist Wasserglas) nur ganz geringe Mengen an gelöstem Aluminium enthält, können dem Reaktionsansatz noch geringe Mengen an Aluminiumionen zu gesetzt werden, sofern man die Ionenaustauschkapazität des erhaltenen Hectorits noch etwas erhöhen möchte.

Für die Herstellung des organophilen Schichtsilikates ist es empfehlenswert pro 100 g Schichtsilikat mindestens 80 mVal der quartären Ammoniumverbindung, vorzugsweise 100 bis 150 mVal zuzusetzen. Oftmals werden die quartären Ammoniumverbindungen nicht in Form einer Reinsubstanz geliefert, sondern sie enthalten noch organische Lösemittel, wie z.B. Isopropanol. Diese Lösemittel beeinträchtigen jedoch die qualitative Beschaffenheit des erfindungsgemäß hergestellten organophilen Schichtsilikates nicht. Wenn man zur Herstellung der erfindungsgemäßen organophilen Schichtsilikate von synthetischen Substraten ausgeht, so ist es nicht erforderlich, diese Silikate nach der Synthese von der alkalischen Mutterlauge abzutrennen, die noch größere Mengen an Fremdsalzen enthalten kann. Die eingesetzte Silikatsuspension kann vielmehr, in Abhängigkeit vom Gehalt an Schichtsilikat, gegebenenfalls mit Wasser verdünnt und nach Abpuffern auf pH 8—9,5 mit anorganischen Säuren, wie Schwefelsäure, oder organischen Säuren mit der quartären Ammoniumverbindung versetzt werden. Es hat sich in diesem Zusammenhang bewährt, die Belegung des Schichtsilikats mit dem organischen Kation in zwei Schritten vorzunehmen, wobei im ersten Schritt der größere Anteil an quartärem Ammoniumsalz zu verwenden ist. Nach dem ersten Schritt lassen sich leicht die Feststoffe von der wäßrigen Phase (die die Fremdionen enthält) abtrennen. Die Belegung mit quartärem Ammoniumsalz im zweiten Schritt erfordert keine besonderen Maßnahmen und läßt sich wie die im ersten Schritt durchführen.

Für eine Umsetzung mit den quartären Ammoniumverbindungen in wäßriger Phase bereitet man eine Tonsuspension mit einem Gehalt von 1—10 Gew.-%, Schichtsilikat, vorzugsweise von 3—5 Gew.-%. Diese Suspension wird auf 50—100°C, vorzugsweise 70—80°C erwärmt. Der Austausch gelingt auch bei Raumtemperatur, dauert dann aber länger. Bei Einsatz aktivierter Silikate, d.h. Silikate in der Na-Form, ist eine Verweilzeit von 15—60 min, insbesondere 20—30 min voll ausreichend.

Nach erfolgter Umsetzung wird das Organosilikat abgesaugt, salzfrei gewaschen, getrocknet und in Einzelfällen gemahlen.

Das so hergestellte organophile Schichtsilikat ergibt bei der Dispersion in organischen Lösemitteln (Toluol, Chlorbenzol, Xylol, Benzin, Alkohole und Ketone) Pasten mit guter Lagerstabilität. Kohlenwasserstoffe mit höherem Molekulargewicht führen zu festeren Stammpasten. Der Feststoffgehalt an organophilem Schichtsilikat liegt bei 5 bis 60 Gew.-%, vorzugsweise bei 15 bis 40 Gew.-%. Diese Pasten sind in den rheologischen Eigenschaften vergleichbar mit Produkten des Standes der Technik. Sie weisen jedoch verbesserte Lagerstabilität auf. Werden allerdings die synthetischen Schichtsilikate mit den angegebenen Halbwertsbreiten von 0,8°—1,0° (2θ) eingesetzt, so lassen sich noch hochkonzentrierte Pasten mit guten rheologischen Werten und erhöhter Lagerstabilität einsetzen.

Die erfindungsgemäß hergestellten organophilen Schichtsilikate eignen sich besonders als Additive mit verbesserten Thioxotropierungseigenschaften und zur Verminderung der Neigung zum Absetzen in Systemen, die auf organischen Lösemitteln basieren, z.B. für Lacke und Rostschutzprimer. Die Erfindung wird durch die folgenden Beispiele näher erläutert.

Beispiel 1

Ein synthetischer Hectorit mit einer Ionenaustauschkapazität von 90 mval/100 g wird mit einer quartären Ammoniumverbindung der Formel II umgesetzt, wobei auf 100 g des Silicats 120 mval der Ammoniumverbindung aufgebracht werden.

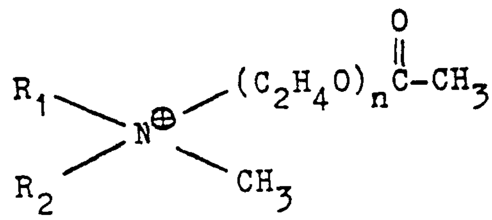 $CH_3COO^-$ (II)

$R_1 = R_2 =$ Stearylalkyl
$n = 1 - 2$

Der Austausch erfolgte in der wäßrigen Phase bei einer Konzentration an Hectorit von 3 Gew.-% über einen Zeitraum von 30 min bei einer Temperatur von 60°C. Das erhaltene Organosilicat wird von der wäßrigen Phase abfiltriert, gewaschen und bei 70°C bis zur Gewichtskonstanz getrocknet.

Von dem pulverförmigen Produkt wird eine Stammpaste hergestellt, die sich aus 85 g Xylol, 10 g Organosilicat und 5 g Additol[R] XL 270, einem Netz- und Geliermittel, zusammensetzt.

Zur Austestung des erfindungsgemäß hergestellten Organosilicats wird ein Rostprimer nach der folgenden Rezeptur zusammengestellt:

6,5 g Phenolharz (Phenodur[R] PR 263, 70 %ig in Butanol)
12,5 g Pigmentmischung*
1 g Carbamidsäureesterharz aus Butylurethan und Formaldehyd (Uresin[R] B)
1 g der Organosilicatpaste wie oben beschrieben
57,5 g Lösemittelmischung**
9,5 g Polyvinylbutyral
2 g Phosphorsäure 85 5ig 1:1 in Butanol

Der so hergestellte Rostprimer wurde bezüglich seiner Viskositäten, seines Abtrenn- und seines Absetzverhaltens untersucht. Ferner wurde zur Durchführung seines anwendungstechnischen Tests auf Eisenbleche ein Anstrich in einer Trockenfilmstärke von 35 µm aufgebracht. An diesen Blechen wurde der Gitterschnitt nach DIN 53 151 durchgeführt und die Änderung des Films nach 14-tätiger Wasserlagerung auf eine Blasenbildung geprüft.

Für den Primer mit dem erfindungsgemäß hergestellten Organosilicat wurden folgende Daten erhalten:

| | | |
|---|---|---|
| Viskosität | nach Herstellung | 45s |
| | nach 40 Tagen | 58s |
| Absetzen | nach 40 Tagen | 0 |
| | nach 6 Monaten | 2 |
| Abtrennen | nach 40 Tagen | 0 |
| | nach 6 Monaten | 2 |
| Gitterschnitt | nach 2 Tagen | GT 1 |
| Blasenbildung | nach 14-tägiger Wasserlagerung | keine |

Die Messung der Viskosität erfolgte durch Messung der Auslaufzeit im Ford-Becher nach 4-DIN 53 211. Beurteilung Abtrennverhalten: Es wurde die Bildung einer pigmentfreien Phase beobachtet, die auf dem Primer aufschwimmt. Die Beurteilung erfolgt in Abhängigkeit vom Volumen;

| | | | |
|---|---|---|---|
| keine Trennung | 0 | 25% des Gesamtvol. | 3 |
| leichte Trennung | 1 | 50% des Gesamtvol. | 4 |
| 10% des Gesamtvol. | 2 | 75% des Gesamtvol. | 5 |

Für die Beurteilung des Absetzverhaltens wurde die Bildung eines Bodensatzes und seine Konsistenz herangezogen:

---

*Die Pigmentmischung setzt sich wie folgt zusammen: 32 g Zinkgelb, 20,8 g Zinktetraoxichchromat, 8,8 g Eisenoxidpigment, 17,6 g Zinkphosphat.

**Die Lösemittelmischung enthält 46,7 g Ethanol, 38,5 g Methylethylketon, 14,8 g Toluol.

| | | | |
|---|---|---|---|
| keine Bodensatz | 0 | Bodensatz, leicht aufrührbar | 2 |
| Hauch eines Bodensatzes | 1 | Bodensatz, nocht gut aufrührbar | 3 |

Beispiel 2 (Vergleichsbeispiel)

Ein synthetischer Hectorit mit einer Ionenaustauschkapazität von 90 mval/100 g wird, wie in Beispiel 1 beschrieben, mit Benzyldimethylstearylammoniumchlorid umgesetzt. Der erhaltene Organohectorit wird wie beschrieben in einem Primer ausgetestet. Dabei wird folgendes Resultat erhalten:

| | | |
|---|---|---|
| Viskosität | nach Herstellung | 39s |
| | nach 40 Tagen | 45s |
| Absetzen | nach 40 Tagen | 0 |
| | nach 6 Monaten | 2 |
| Abtrennen | nach 40 Tagen | 3 |
| | nach 6 Monaten | 5 |
| Gitterschnitt | nach 2 Tagen | GT 1 |
| Blasenbildung | nach 14-tätiger Wasserlagerung | keine |

Beispiel 3 (Vergleichsbeispiel)

Es wird wie in Beispiel 1 und 2 ein Organohectorit unter Einsatz von Ethanolmethyldistearylammoniumchlorid hergestellt und ausgeprüft. Der Rostprimer zeigte folgendes Resultat:

| | | |
|---|---|---|
| Viskosität | nach Herstellung | 50s |
| | nach 40 Tagen | 60s |
| Absetzen | nach 40 Tagen | 0 |
| | nach 6 Monaten | 2 |
| Abtrennen | nach 40 Tagen | 2 |
| | nach 6 Monaten | 4 |
| Gitterschnitt | nach 2 Tagen | GT 1 |
| Blasenbildung | nach 14-tätiger Wasserlagerung | keine |

Die Beispiele zeigen, daß ein erfindungsgemäß hergestellter Organohectorit das Absetzverhalten in polaren Formulierungen wesentlich verbessert unter Beibehaltung aller übrigen Eigenschaften.

Beispiel 4 (Vergleichsbeispiel)

Dieses Beispiel zeigt, daß der Einsatz der beschriebenen quarternären Ammoniumverbindungen auch dann Vorteile bietet, wenn als Ausgangs-Schichtsilicate natürliche Bentonite mit an sich nicht bevorzugter niedrigerer Austauschkapazität verwendet werden: Ein natürlicher Bentonit mit geringerer Austauschkapazität AK (Bentonit EPH der Fa. Südchemie, München, AK= ca. 60 meq/100 g) wird mit der in Beispiel 1 verwendeten quartären Ammoniumverbindung umgesetzt, wobei auf 100 g des Bentonits 80 meq der Ammoniumverbindung eingesetzt werde. Die Ausprüfung erfolgte wieder in einem Rostprimer der angegebenen Rezeptur. Sie erbrachte folgendes Resultat:

| | | |
|---|---|---|
| Viskosität | nach Herstellung | 42s |
| | nach 40 Tagen | 56s |
| Absetzen | nach 40 Tagen | 0 |
| | nach 6 Monaten | 2 |
| Abtrennen | nach 40 Tagen | 1 |
| | nach 6 Monaten | 3 |

| | | |
|---|---|---|
| Gitterschnitt | nach 2 Tagen | GT 1 |
| Blasenbildung | nach 14-tätiger Wasserlagerung | keine |

**Patentansprüche für die Vertragsstaaten: BE CH DE FR GB IT LI NL SE**

1. Gelbildendes organophiles Schichtsilikat, dessen austauschbare Kationen ganz oder teilweise durch organische Kationen ersetzt sind, dadurch gekennzeichnet, daß das organische Kation ein quartäres Ammonium-Ion der Formel I

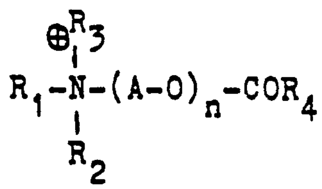

(I)

ist, wobei $R_1$ und $R_2$ gleich oder verschieden sein können und $C_6$—$C_{30}$-Alkyl oder $C_6$—$C_{30}$-Alkenyl, $R_3$ $C_1$—$C_6$-Alkyl, $R_4$ $C_1$—$C_6$-Alkyl, A die Gruppe —$C_2H_4$— oder —$C_3H_6$— und n 1 oder 2 bedeuten.

2. Gelbildendes organophiles Schichtsilikat nach Anspruch 1, dadurch gekennzeichnet, daß es ein quartäres Ammonium-Ion der Formel I enthält, wobei $R_1$ und $R_2$ gleich oder verschieden sein können und $C_8$—$C_{18}$-Alkyl oder $C_8$—$C_{18}$-Alkenyl, $R_3$ $C_1$—$C_4$-Alkyl, $R_4$ $C_1$—$C_6$-Alkyl, A die Gruppe —$C_2H_4$— oder —$C_3H_6$— und n 1 oder 2 bedeuten.

3. Gelbildendes organophiles Schichtsilikat nach Anspruch 1, dadurch gekennzeichnet, daß die Schichtsilikate Hectorite, Bentonite und Montmorillonite darstellen.

4. Gelbildendes organophiles Schichtsilikat nach Anspruch 1, dadurch gekennzeichnet, daß die Schichtsilikate eine Ionenaustauschkapazität von 50—120 mval/100 g Schichtsilikat, vorzugsweise von 80—100 mval/100 g Silikat besitzen.

5. Gelbildendes organophiles Schichtsilikat gemaß Anspruch 1, dadurch gekennzeichnet, daß die Schichtsilikate 060 Halbwertsbreiten von 0,8—1,2°, vorzugsweise von 0,8—1,0° (2θ) besitzen.

6. Gelbildendes organophiles Schichtsilikat nach Anspruch 1, dadurch gekennzeichnet, daß mindestens 80% aller austauschbaren Kationen durch das quartäre Ammoniumkation ersetzt sind.

7. Verfahren zur Herstellung des gelbildenden organophilen Schichtsilikats nach Anspruch 1, dadurch gekennzeichnet, daß man das Schichtsilikat in einem Lösemittel vorzugsweise in Wasser, mit einem Salz umsetzt, das das quartäre Ammonium-Ion der Formel I enthält.

8. Gelförmige Dispersionen mit einem Gehalt an Schichtsilikaten in einem organischen Lösemittel, dadurch gekennzeichnet, daß die Dispersion 5 bis 60, vorzugsweise 15 bis 40 Gew.-% des gelbildenden organophilen Schichtsilikats nach Anspruch 1 enthält.

**Patentansprüche für den Vertragsstaat: AT**

1. Verfahren zur Herstellung gelbildender organophiler Schichtsilikate, deren austauschbare Kationen ganz oder teilweise durch quartäre Ammonium-Ionen der Formel

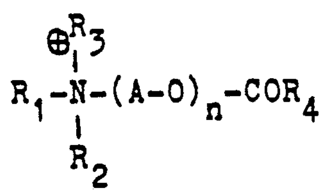

(I)

ausgetauscht sind, wobei $R_1$ und $R_2$ gleich oder verschieden sein können und $C_6$—$C_{30}$-Alkyl oder $C_6$—$C_{30}$-Alkenyl, $R_3$ $C_1$—$C_6$-Alkyl, $R_4$ $C_1$—$C_6$-Alkyl, A die Gruppe —$C_2H_4$— oder —$C_3$—$H_6$— und n 1 oder 2 bedeuten, dadurch gekennzeichnet, daß man das Schichtsilikat in einem Lösemittel, vorzugsweise in Wasser, mit einem Salz umsetzt, das das quartäre Ammonium-Ion der Formel I enthält.

2. Verfahren nach Anspruch 1, dadurch gekennzeichnet, daß man solche Schichtsilikate herstellt, die ein quartäres Ammonium-Ion der Formel I enthälten, wobei $R_1$ und $R_2$ gleich oder verschieden sein können und $C_8$—$C_{18}$-Alkyl oder $C_8$—$C_{18}$-Alkenyl, $R_3$ $C_1$—$C_4$-Alkyl, $R_4$ $C_1$—$C_6$-Alkyl, A die Gruppe —$C_2H_4$— oder —$C_3H_6$— und n 1 oder 2 bedeuten.

3. Verfahren nach Anspruch 1, dadurch gekennzeichnet, daß man gelbildende organophile Schichtsilikate herstellt, die Hectorite, Bentonite oder Montmorillonite enthalten.

4. Verfahren nach Anspruch 1, dadurch gekennzeichnet, daß man solche Schichtsilikate verwendet, die eine Ionenaustauschkapazität von 50—120 mval/100 g Schichtsilikat, vorzugsweise von 80—100 mval/100 g Silikat besitzen.

5. Verfahren nach Anspruch 1, dadurch gekennzeichnet, daß man solche Schichtsilikate verwendet, die 060 Halbwertsbreiten von 0,8—1,2°, vorzugsweise 0,8—1,0° (2θ) besitzen.

6. Verfahren nach Anspruch 1, dadurch gekennzeichnet, daß mindestens 80% aller austauschbaren Kationen durch das quartäre Ammoniumkation ersetzt werden.

7. Gelförmige Dispersionen mit einem Gehalt an Schichtsilikaten in einem organischen Lösemittel, dadurch gekennzeichnet, daß die Dispersion 5 bis 60, vorzugsweise 15 bis 40 Gew.-% des gelbildenden organophilen Schichtsilikats hergestellt nach Anspruch 1 enthält.

**Revendications pour les Etats contractants: BE CH DE FR GB IT LI NL SE**

1. Phyllosilicates organophiles formant un gel, dont les cations échangeables sont remplacés en totalité ou en partie par des cations organiques, caractérisés en ce que le cation organique est un ion ammonium quaternaire de formule I ci-dessous:

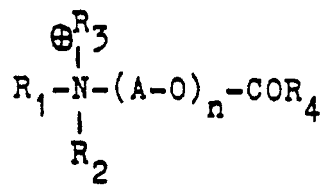

(I)

dans laquelle $R_1$ et $R_2$, qui peuvent être identiques ou différents l'un de l'autre, sont chacun un alkyle ou un alcényle en $C_6$—$C_{30}$, $R_3$ et $R_4$ sont des alkyles en $C_1$—$C_6$, A est le groupe —$C_2H_4$— ou —$C_3H_6$— et n le nombre 1 ou 2.

2. Phyllosilicate organophile selon la revendication 1, caractérisé en ce qu'il contient un ion ammonium quaternaire de formule I dans lequel $R_1$ et $R_2$, identiques ou différents, sont des alkyles ou des alcényles en $C_8$—$C_{18}$, $R_3$ est un alkyle en $C_1$—$C_4$, $R_4$ un alkyle en $C_1$—$C_6$, A le groupe —$C_2H_4$— ou —$C_3H_6$— et n le nombre 1 ou 2.

3. Phyllosilicate organophile selon la revendication 1, caractérisé en ce que le phyllosilicate est une hectorite, une bentonite ou une montmorillonite.

4. Phyllosilicate organophile selon la revendication 1, caractérisé en ce que le phyllosilicate a une capacité d'échange d'ions de 50 à 120 mval/100 g du phyllosilicate, de préférence de 80 à 100 mval/100 g.

5. Phyllosilicate organophile selon la revendication 1, caractérisé en ce que le phyllosilicate présente des demi-largeurs 060 de 0,8 à 1,2°, de préférence de 0,8 à 1,0° (2θ).

6. Phyllosilicate organophile selon la revendication 1, caractérisé en ce que 80% au moins de tous les cations échangeables sont remplacés par le cation ammonium quaternaire.

7. Procédé de préparation du phyllosilicate organophile formant un gel selon la revendication 1, procédé caractérisé en ce que l'on fait réagir le phyllosilicate dans un solvant, de préférence dans de l'eau, avec un sel contenant l'ion ammonium quaternaire de formule I.

8. Dispersions formant des gels, qui contiennent des phyllosilicates dans un solvant organique, dispersions caractérisées en ce qu'elles contiennent de 5 à 60% en poids, de préférence de 15 à 40%, d'un phyllosilicate organophile formant un gel, selon la revendication 1.

**Revendications pour l'Etat contractant: AT**

1. Procédé de préparation de phyllosilicates organophiles formant un gel, dont les cations échangeables sont échangés en totalité ou en partie par des ions ammoniums quaternaires de formule:

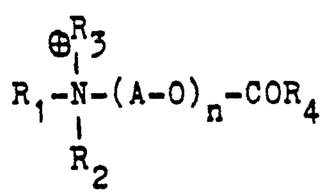

(I)

(dans laquelle $R_1$ et $R_2$, qui peuvent être identiques ou différents l'un de l'autre, sont des alkyles ou des alcényles en $C_6$—$C_{30}$, $R_3$ et $R_4$ sont des alkyles en $C_1$—$C_6$, A est le groupe —$C_2H_4$— ou —$C_3H_6$— et n le nombre 1 ou 2), procédé caractérisé en ce que l'on fait réagir le phyllosilicate dans un solvant, de préférence dans de l'eau, avec un sel contenant l'ion ammonium quaternaire de formule I.

2. Procédé selon la revendication 1, caractérisé en ce que l'on prépare des phyllosilicates ayant un ion ammonium quaternaire de formule I dans lequel $R_1$ et $R_2$, identiques ou différents, sont des alkyles ou des alcényles en $C_8$—$C_{18}$, $R_3$ est un alkyle en $C_1$—$C_4$, $R_4$ un alkyle en $C_1$—$C_6$, A le groupe —$C_2H_4$— ou —$C_3H_6$— et n le nombre 1 ou 2.

3. Procédé selon la revendication 1, caractérisé en ce que l'on prépare des phyllosilicates organophiles formant des gels, qui contiennent une hectorite, une bentonite ou une montmorillonite.

4. Procédé selon la revendication 1, caractérisé en ce que l'on utilise des phyllosilicates ayant une capacité d'échange d'ions de 50 à 120 mval/100 g du phyllosilicate, de préférence de 80 à 100 mval/100 g.

5. Procédé selon la revendication 1, caractérisé en ce que l'on utilise des phyllosilicates qui présentent des demi-largeurs 060 de 0,8 à 1,2°, de préférence de 0,8 à 1,0° (2 θ).

6. Procédé selon la revendication 1, caractérisé en ce que 80% au moins de tous les cations échangeables sont remplacés par le cation ammonium quaternaire indiqué.

7. Dispersions formant des gels, qui contiennent des phyllosilicates dans un solvant organique, dispersions caractérisées en ce qu'elles contiennent de 5 à 60% en poids, de préférence de 15 à 40%, d'un phyllosilicate organophile formant un gel, selon la revendication 1.

**Claims for the Contracting States: BE CH DE FR GB IT LI NL SE**

1. A gel-forming organophilic layer silicate whose exchangeable cations have been wholly or partly replaced by organic cations, wherein the organic cation is a quaternary ammonium ion of the formula I

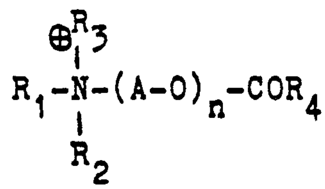

(I)

where $R_1$ and $R_2$ can be identical or different and denote $C_6$—$C_{30}$-alkyl or $C_6$—$C_{30}$-alkenyl, $R_3$ denotes $C_1$—$C_6$-alkyl, $R_4$ denotes $C_1$—$C_6$-alkyl, A denotes the group —$C_2H_4$— or —$C_3H_6$— and n denotes 1 or 2.

2. The gel-forming organophilic layer silicate as claimed in claim 1, which contains a quaternary ammonium ion of the formula I where $R_1$ and $R_2$ can be identical or different and denote $C_8$—$C_{18}$-alkyl or $C_8$—$C_{18}$-alkenyl, $R_3$ denotes $C_1$—$_4$-alkyl, $R_4$ denotes $C_1$—$C_6$-alkyl, A denotes the group —$C_2H_4$— or —$C_3H_6$— and n denotes 1. or 2.

3. The gel-forming organophilic layer silicate as claimed in claim 1, wherein the layer silicates are hectorites, bentonites and montmorillonites.

4. The gel-forming organophilic layer silicate as claimed in claim 1, wherein the layer silicates have an ion exchange capacity of 50—120 meq/100 g of layer silicate, preferably of 80—100 meq/100 g of silicate.

5. The gel-forming organophilic layer silicate as claimed in claim 1, wherein the layer silicates have 060 half-value widths of 0.8—1.2°, preferably of 0.8—1.0° (2θ).

6. The gel-forming organophilic layer silicate as claimed in claim 1, wherein at least 80% of all exchangeable cations have been replaced by the quaternary ammonium cation.

7. A process for preparing the gel-forming organophilic layer silicate as claimed in claim 1, which comprises reacting the layer silicate in a solvent, preferably in water, with a salt which contains the quaternary ammonium ion of the formula I.

8. A dispersion in gel form which contains layer silicates in an organic solvent, wherein the dispersion contains 5 to 60, preferably 15 to 40, % by weight of the gel-forming organophilic layer silicate as claimed in claim 1.

**Claims for the Contracting State: AT**

1. A process for preparing a gel-forming organophilic layer silicate whose exchangeable cations have been wholly or partly replaced by quaternary ammonium ions of the formula

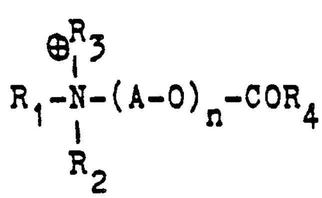

(I)

where $R_1$ and $R_2$ can be identical or different and denote $C_6$—$C_{30}$-alkyl or $C_6$—$C_{30}$-alkenyl, $R_3$ denotes $C_1$—$C_6$-alkyl, $R_4$ denotes $C_1$—$C_6$-alkyl, A denotes the group —$C_2H_4$— or —$C_3H_6$— and n denotes 1 or 2, which comprises reacting the layer silicate in a solvent, preferably in water, with a salt which contains the quaternary ammonium ion of the formula I.

2. The process as claimed in claim 1, wherein the layer silicates prepared contain a quaternary ammonium ion of the formula I where $R_1$ and $R_2$ can be identical or different and denote $C_8$—$C_{18}$-alkyl or $C_8$—$C_{18}$-alkenyl, $R_3$ denotes $C_1$—$C_4$-alkyl, $R_4$ denotes $C_1$—$C_6$-alkyl, A denotes the group —$C_2H_4$— or —$C_3H_6$— and n denotes 1 or 2.

3. The process as claimed in claim 1, wherein the gel-forming organophilic layer silicates prepared contain hectorites, bentonites or montmorillonites.

4. The process as claimed in claim 1, wherein the layer silicates used have an ion exchange capacity of 50—120 meq/100 g of layer silicate, preferably of 80—100 meq/100 g of silicate.

5. The process as claimed in claim 1, wherein the layer silicates used have 060 half-value widths of 0.8—1.2°, preferably of 0.8—1.0° (2θ).

6. The process as claimed in claim 1, wherein at least 80% of all exchangeable cations are replaced by the quaternary ammonium cation.

7. A dispersion in gel form which contains layer silicates in an organic solvent, wherein the dispersion contains 5 to 60, preferably 15 to 40, % by weight of the gel-forming organophilic layer silicate as claimed in claim 1.